# EUROPEAN PATENT SPECIFICATION

(11) **EP 1 563 651 B1**
(45) Date of publication and mention of the grant of the patent: **04.10.2006**
(21) Application number: 03810563.1
(22) Date of filing: 07.11.2003
(51) Int. Cl.: H04L 12/56

(54) **DATA PACKET TRANSMISSION IN A SINGLE CONTAINER**
DATENPAKETÜBERTRAGUNG IN EINEM EINZIGEN BEHÄLTER
TRANSMISSION DE DONNEES PAR PAQUETS DANS UN CONTENANT UNIQUE

(30) Priority: 08.11.2002 DE 10252535
(43) Date of publication of application: 17.08.2005
(73) Proprietor: Philips Intellectual Property & Standards GmbH, 20099 Hamburg (DE); Koninklijke Philips Electronics N.V., 5621 BA Eindhoven (NL)
(72) Inventor: Herrmann,Ch. Philips Int. Property&Standards Gmbh, 52066 Aachen (DE); Nickel, P. Philips Int. Property & Standards Gmbh, 52066 Aachen (DE)
(74) Representative: Volmer, Georg
(86) International application number: PCT/IB2003/004987
(87) International publication number: WO 2004/043018

(56) References cited:
- WO-A-01/99353
- WO-A-02/33931
- US-A1- 2002 009 999
- "3 GPP TS 25.212 (V5.2.0) Technical specification group radio access network: multiplexing and channel coding (FDD)" 3 GENERATION PARTNERSHIP PROJECT, [Online] September 2002 (2002-09), pages 1-74, XP002270602 http://www.3gpp.org Retrieved from the Internet: <URL:http://www.3gpp.org/ftp/Specs/html-in fo/25212.htm> [retrieved on 2004-02-17]

## Description

The present invention relates to data packet transmission. More particularly, the present invention relates to a method of transmitting a data packet from a transmitting station to a receiving station, a communication system, a transmitting station and a software program product for performing a transmission of data packets from a transmitting station to a receiving station.

A data packet transmission method is described in the following three documents, 3 GPP TS 25 308 V5.2.0 (2002/03), technical specification, third generation partnership project; technical specification group radio access networks; high speed downlink packet access (BBBPA); overall description; stage 2 (release 5), and 3 GPP TS 25.321 V5.2.0 (2002/09), technical specification third generation partnership project; technical specification group radio access network; MAC protocol specification (release 5), and 3 GPP TS 25.433 V5.2.0 (2002/09), technical specification third generation partnership project; technical specification group radio access network; UTRAN Iub interface NBAP signaling (release 5). In particular, the above-mentioned documents describe a method for high speed data transmission over the high speed downlink shared channel (hereinafter referred to as "HS-DSCH") based on a HARQ (Hybrid Automatic Repeat Request) retransmission protocol, which allows for soft-combining the soft-bits of a retransmission, which was just received, with the soft-bits of an earlier transmission or retransmission. This retransmission protocol works with positive acknowledgements, indicating to the transmitting side error-free decoding of the received packet, and negative acknowledgements indicating to the transmitting side the need for a retransmission of the packet, since decoding was not error-free.

When transmitting data via the HS-DSCH, on top of the HARQ retransmission protocol, another protocol, the Radio Link Control (RLC) protocol is present, which is relevant for the present invention.

For the details of the Radio Link Control protocol (RLC protocol) e.g. acknowledged mode (AM) and unacknowledged mode (UM) data transmission, 3GPP TS 25,322 V5.2.0 (2002-09) Technical Specification 3rd Generation Partnership Project; Technical Specification Group Radio Access Network.

This RLC protocol is in charge of
performing segmentation of RLC SDUs (service data units, i.e. data units, which are received from the next higher layer above the RLC layer) into fragments, which are sent as part of an RLC PDU (protocol data unit, i.e. a data unit, which the RLC layer bands down to the next lower layer, which is here the MAC layer), and, if applicable, concatenation of different RLC SDUs or fragments of different RLC SDUs into RLC PDUs, and
- (if configured accordingly) controlling retransmission ofRLC PDUs, which the receiver indicates to the transmitter as not having been correctly received.
   If data is transmitted via the HS-DSCH, these data are also always processed by an RLC protocol entity above the HARQ protocol, and this RLC protocol entity can then be configured for
- Acknowledged mode (AM) data transmission, or
- Unacknowledged mode (UM) data transmission.

"Acknowledged mode data" is also abbreviated by AMD, "Unacknowledged mode data" by UMD. The term UM RLC PDU is used to identify an RLC PDU, which was generated by an RLC entity, which is configured for UM, AM RLC PDU is defined accordingly.

In both UMD and AMD transmission, the RLC PDUs have a sequence number, where UM prescribes 7 bits and AM prescribes 12 bits for coding the sequence number. This corresponds to a sequence number range from 0 to 127 for UM, and from 0 to 4095 for AM. If configured for AMD transmission, the RLC protocol performs segmentation (and, if applicable, concatenation) of RLC SDUs into RLC PDUs, and improves reliability of data transmission by performing retransmissions. If configured for UMD transmission, the RLC protocol only performs segmentation and, if applicable, concatenation.

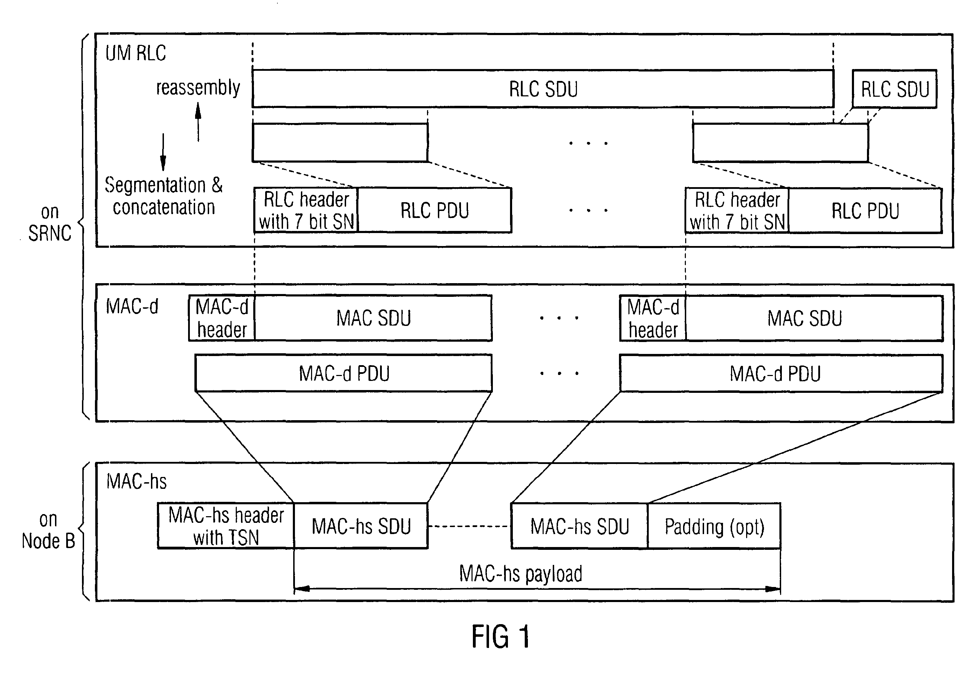

On the transmitting side (as may be seen from Fig. 1), an RLC PDU is further processed by the MAC layer (located on the SRNC, serving radio network controller), or more precisely the MAC-d layer, which may add a MAC header, if logical channels have to be distinguished. This MAC header identifies the logical channel, on which the RLC PDU is transmitted. The MAC-d PDU (i.e. the protocol data unit produced by the MAC-d layer) is then delivered to the MAC-hs layer located on the Node B of the UMTS. Here, one or more MAC-d PDUs destined for the same mobile station, are compiled into a MAC-hs PDU. These MAC-d PDUs may belong to different logical channels, i.e. have different MAC headers. Hence, the MAC-hs PDU multiplexes MAC-d PDUs of different logical channels, however, destined for the same receiving mobile station. In contrast to that, one MAC-d PDU always contains exactly one RLC PDU.

In general, a service data unit (SDU) of a considered protocol layer is defined in the relevant literature as a data unit, which this considered protocol layer receives from the next higher protocol layer. The considered protocol layer processes the SDU, which in case of the RLC protocol means e.g. that the SDU is segmented into fragments. As a result of the protocol processing, the SDU is transformed into one or more PDUs (protocol data units), which in case of the RLC protocol then e.g. contain each one fragment of the segmented SDU. These fragments are provided with an RLC header, which contains at least a sequence number, and then form the payload or content of an RLC PDU. In general, PDUs of a considered protocol layer are defined as the data units, which the considered protocol layer delivers to the next lower protocol layer.

A MAC-hs PDU is generated from one or more MAC-d PDUs and then consists of these MAC-d PDUs and a MAC-hs header, which at least comprises a sequence number (so-called TSN, transmission sequence number), which in UMTS is coded with 6 bits corresponding to a sequence number range of 0 to 63. The MAC-hs PDU is further processed by the physical layer. Generally, the data units, which the physical layer processes in the context of the HS-DSCH, are called *transport blocks,* i.e. a MAC-hs PDU is also a transport block, and the count of bits, which form the transport block (i.e. here the MAC-hs PDU), is called the *transport block size*. The physical layer processing of the transport block of type MAC-hs PDU is as follows;

The physical layer adds a cyclic redundancy check (CRC) sum (of 24 bit) and after this applies rate-1/3-turbo-coding to the bits of the transport block (of type MAC-hs PDU) and the CRC bits, i.e. adds parity bits resulting from the turbo coding, as described in 3GPP TS 25.212 V5.2.0 (2002-09), 3rd Generation Partnership Project: Technical Specification Group Radio Access Network; Multiplexing and channel coding (FDD) (Release 5).

Furthermore, rate matching is applied, as described in TS 25.212 V5.2.0. which adjusts the number of bits, which are output of the rate-1/3-turbo-coder to the number of bits, which can be transmitted within 2ms via the air interface. The number of bits, which can be transmitted within 2ms via the air interface, depends on the chosen number of channelization codes (1 to 15 can be used, and they all have a spreading factor of 16) as well as on the chosen modulation scheme, which can be QPSK (Quaternary phase shift keying) or 16QAM (Quadrature Amplitude Modulation). E.g. the number of bits, which can be transmitted in 2ms with 16QAM, is by a factor of 2 bigger than the number of bits, which can be transmitted with QPSK.

Rate matching can e.g. mean puncturing, i.e. deleting pre-defined bits in the sequence of bits, which is output of the rate-1/3-turbo-coder, such that the resulting number of bits exactly fits the number of bits, which can be sent over the air interface within 2ms. The receiving side knows the positions of the punctured bits, and considers them in the decoding process e.g. as bits with value zero.

If puncturing has to be applied, the forward error protection (FEC) necessarily becomes weaker than without puncturing. Puncturing may be avoided, e.g. if one or more additional channelization codes are used for the transmission over the air interface.

TS 25.212 V5.2.0 describes some further steps of the physical layer processing of a transport block of MAC-hs type, which are not important in the context of the present invention.

The period of 2ms is also called the transmission time interval (TTI) of the HS-DSCH. Since it is equal to the periodicity, at which a transport block (of MAC-hs type) is transferred by the physical layer on the radio interface, it also corresponds to the inter-arrival time of a transport block (of MAC-hs type) at the physical layer, i.e. the time between consecutive deliveries of data between the MAC layer and the physical layer. In other words, the physical layer processes within a TTI of 2ms a container of bits, i.e. the MAC-hs PDU bits, and is ready after 2ms to process the next container of bits. In principle due to CRC attachment and channel encoding by means of turbo coding, the number of bits, which are then sent over the air interface, is greater than the number of bits of the container. If the number X of bits, which the physical layer can transmit over the air interface (after turbo encoding) within the TTI of 2ms is kept fixed for two containers of different size (i.e. different number of bits), where the container sizes are smaller than X minus 24 (corresponding to the 24 CRC bits), the FEC of the smaller container is stronger than that of the bigger container, e.g. since less puncturing would be applied for the smaller container. Likewise, if a container of a given size S is transmitted after physical layer processing once with X bits (X > S + 24) over the air interface, and once with Y>X bits over the air interface, the FEC is usually stronger, if Y bits are used for transmission over the air interface.

In the following, the term "container", in conjunction with UMTS, denotes the bits of the MAC-hs PDU, i.e. of the transport block of MAC-hs PDU type.

The Node B is in charge of serving several UEs, which receive data via the HS-DSCH. For this purpose, there is a scheduler function implemented in the MAC-hs layer on the Node B. This scheduler decides e.g to which UEs to MAC-hs PDUs and also, whether a MAC-hs PDU has to be retransmitted, or whether transmission or retransmission of a MAC-hs PDU has to be aborted.

UM data transmission over the HS-DSCH in UMTS release 5 may become critical if too many UM RLC-PDUs (unacknowledged mode radio link control protocol data units) of the same logical channel or connection are contained in a single MAC-hs PDU and successive MAC-hs PDUs get lost such that more than 127 consecutive MAC-d PDUs of the same logical channel, and hence more than 127 consecutive UM RLC PDUs sent by the same RLC entity are lost. In this case the decryption of all the following RLC-PDUs may fail, because the time-varying input or COUNT-C to the algorithm for ciphering (on the transmitting side) and for deciphering (on the receiving side) get out of synchronization, i. e. a different COUNT-C value is used for decryption on the receiving side than the COUNT-C value, which was used for encryption on the sending side. In more details, the reason for the loss of synchronization concerning the time-varying input is as follows: The COUNT-C value is composed of two parts, the HFN (hyper frame number), which represents the 25 most significant bits of the COUNT-C and the 7-bit sequence number of the UM RLC PDU, which is sent (where COUNT-C is used as time-varying input of the encryption engine to cipher the payload bits of the UM RLC PDU) or was received (where COUNT-C is used as time-varying input of the decryption engine to decipher the payload bits of the UM RLC PDU). The HFN of the COUNT-C (on both the transmitting and receiving side) is incremented, if the RLC sequence number wraps around or rolls over, i. e. if the RLC sequence number of the previous RLC PDU that was processed was 127, and the RLC sequence number of the currently processed RLC PDU is 0.

The WO 01/99353 describes a resource allocation in packet-format communication. It is described that a temporary block flow is set up in which data is transmitted in packets in one or more channels in a first direction from a mobile device to the communication network. At the end of the transmission in the block flow, information is set in the last packet to be transmitted about the end of the block flow, wherein the receiver of the packets acknowledges the reception of the packets. After the end of the transmission of the packets in said first direction a predetermined time is waited until an acknowledgement is transmitted.

It is an object of the present invention to provide for an improved data packet transmission.

According to an exemplary embodiment of the present invention as set forth in the independent claim, the above object may be achieved by a method of transmitting a plurality of data packets according to the UMTS standard from a transmitting station to a receiving station, the method comprising the steps of: transmitting a first number of first data packets of a plurality of first data packets in a first container of a plurality of second containers from the transmitting station to the receiving station, wherein the first data packets are data packets of a first connection; and wherein the first number is smaller than or equal to a predefined maximum number of data packets of a single connection allowed to be contained in a first container, wherein further data packets of the first connection are transmitted in a second or further container.

Due to the described solution, it is possible, e. g. in UMTS, to achieve this goal without a change of the RLC protocol for UM data transmission, which may reduce costs to incorporate this improvement considerably.

In other words, according to this exemplary embodiment of the present invention, a method of transmitting data packets is provided, in which only a maximum number of data packets of the same logical channel or connection are transmitted within one container. This does not exclude that the container carries data packets of other connections, for which there is no such restriction to a maximum number of data packets of these other connections, which has to be observed when putting the data packets in the container.

If the maximum number of data packets of a given logical channel or connection is reached for one container, the possibly remaining data packets of the considered logical channel or connection are put in another container to be sent later on.

Therefore, even if more than one MAC-hs PDU gets lost during transmission or decoding, it may still be possible to further decode and decrypt data transmitted on this logical channel on the receiving side.

According to another exemplary embodiment of the present invention as set forth in claim 2, a preset number of first data packets is transmitted from the transmitting station to the receiving station in a second number of second containers, wherein the second number is bigger than or equal to a minimum number.

Advantageously, according to this exemplary embodiment of the present invention, there is always a minimum number of containers provided in which the plurality of first data packets is transmitted. It is ensured that the first data packets are distributed among the minimum number of second containers on the one hand and that each container may only comprise a maximum number of first data packets on the other hand.

According to another exemplary embodiment of the present invention as set forth in claim 3, a plurality of second data packets is transmitted from the transmitting station to the receiving station. Each data packet of the plurality of first data packets and second data packets is provided with connection information, which indicates whether the corresponding data packet is a first data packet or a second data packet, may be deduced.

According to this exemplary embodiment of the present invention, each data packet may be labeled the number of the logical channel to which it belongs. Advantageously, this may lead to a effective identification of a respective data packet.

According to another exemplary embodiment of the present invention as set forth in claim 4, each data packet of the plurality of first and second data packets is an encoded data packet comprising connection information, which connection information is not encoded, wherein the consecutive data packet number of a third data packet of the plurality of first and second data packets are supplied to encode the third data packet, resulting in an encoded third data packet comprising connection information. Encoding can also mean encrypting by means of a ciphering algorithm.

Advantageously, according to this exemplary embodiment of the present invention, each data packet is encoded with the use of the corresponding consecutive data packet number. Therefore, each encoded data packet comprises information about its sequence number and whether the data packet is a first data packet or a second data packet.

According to another exemplary embodiment of the present invention as set forth in claim 5, the first container is labeled with a container sequence number. Furthermore, the first container has a first container size, wherein the first container size is influenced by a number of data packets inside the first container and wherein an error protection of the first container is influenced by the number of data packets inside the first container.

Advantageously, according to this exemplary embodiment of the present invention, an error protection of the first container may be reduced by reducing the number of data packets inside the first container, leading to a reduced container size. Therefore, a minimization of container size may lead to a minimization of error protection and therefore of an increased possibility of a transmission of the first container without indication of an error.

According to another exemplary embodiment of the present invention as set forth in claim 6, the transmitting station is configured by a network unit wherein the network unit determines the maximum number based on general conditions. The network unit transmits a first signal to the transmitting station, wherein the first signal comprises information about the maximum number of data packets inside the first container. Therefore, according to this exemplary embodiment of the present invention, the channel conditions may be recorded by the network unit and, based on the recorded channel conditions, the network unit may calculate a maximum size of the first container. After the network unit has calculated the maximum size of the first container, information about this maximum size is included in a first signal which is then transmitted to the transmitting station.

According to another exemplary embodiment of the present invention as set forth in claim 7, the transmitting station reads the connection information of a fourth data packet of the plurality of first and second data packets and decides, depending on the received connection information, whether the fourth data packet is a first data packet. If the transmitting station comes to the conclusion that the fourth data packet is in fact a first data packet, meaning that it is a data packet of the first connection, and if the resulting first number is smaller than or equal to the maximum number, the transmitting station adds the first data packet to the first container.

Therefore, according to this exemplary embodiment of the present invention, a fourth data packet is only added to the first container, if it is a first data packet and if the first container contains less first data packets than the maximum number.

Advantageously, according to this exemplary embodiment of the present invention, the fourth data packet comprises connection information which is read by the transmitting station upon receipt of the fourth data packet. By using this connection information the transmitting station may decide whether the data packet is to be added in the first container or not. No additional communication is needed.

According to another exemplary embodiment of the present invention as set forth in claim 8, the network unit determines the maximum number and the minimum number based on general conditions. After that, the network unit transmits a second signal to the transmitting station, wherein the second signal comprises information about the maximum number and the minimum number. Advantageously, according to this exemplary embodiment of the present invention, changes in channel conditions may be detected by the network unit which then, as a reaction on the changes in general conditions, sets the maximum number of first data packets, which are to be included in the first container, and the minimum number of second containers, into which the plurality of first data packets is distributed. Therefore, changing channel conditions may change the size of the containers and the number of data packets of the same connection inside each container, leading to an improved data packet transmission.

According to another exemplary embodiment of the present invention as set forth in claim 9, the method is applied for data transmission over the high speed downlink shared channel UMTS.

The object is further solved by a transmitter station operating according to the UMTS standard for transmitting a plurality of data packets from the transmitting station to a receiving station, wherein the transmitting station is adapted for performing a transmission of a first number of first data packets of a plurality of first data packets in a first container of a plurality of second containers from the transmitting station to the receiving station, wherein the first data packets are data packets of a first connection; wherein the first number is smaller than or equal to a predefined maximum number of data packets of a single connection allowed to be contained in a first container, wherein further data packets of the first connection are transmitted in a second or further container.

According to another exemplary embodiment of the present invention is solved by a communication system including a transmitter station as described above.

According to another exemplary embodiment of the present invention is solved by a software program product containing a program code to carry out the steps of the method as described above, when the program code is running on a computer. packets of the first connection and the first number is smaller than or equal to a maximum number.

It may be seen as a gist of an exemplary embodiment of the present invention that only a maximum number of data packets of the same logical channel or the same connection are transmitted within one container. Due to this, in case of UM data transmission over HS-DSCH in UMTS, it may be ensured that an erroneous transmission of more than one MAC-hs PDU resulting in a loss of one or more MAC-hs PDUs does not lead to a disability of decoding or decrypting of the data packets of the logical channel. It may be noted that a loss of a MAC-hs PDU can have two reasons: Either the transmission of the MAC-hs PDU has to be aborted by the transmitting side, because the maximum number of retransmissions was reached, or the transmitting side erroneously assumes that it received a positive acknowledgement message for a MAC-hs PDU although the receiving side sent a negative acknowledgment, i.e. expects a retransmission.

These and other aspects of the present invention will become apparent from and elucidated with reference to the embodiments described hereinafter.

Exemplary embodiments of the present invention will be described in the following with reference to the following drawings:
- Fig. 1: shows a schematic representation of a data flow between the different protocol layers according to an exemplary embodiment of the present invention.
- Fig. 2: shows a schematic representation of a protocol architecture showing the location of protocol layers on the different network components according to an exemplary embodiment of the present invention.
- Fig. 3: shows the input parameters of a stream-cipher-algorithm for ciphering and deciphering, especially a structure of the time-varying input parameter COUNT-C for the transmitter side (when ciphering) and the receiving side (when deciphering).
- Fig. 4: shows a schematic representation of a method according to an exemplary embodiment of the present invention.
- Fig. 5: shows a communication system according to an exemplary embodiment of the present invention.

The protocol architecture schematically represented in Fig. 1 may be applied for data transmission over the high speed downlink shared channel HS-DSCH in UMTS.

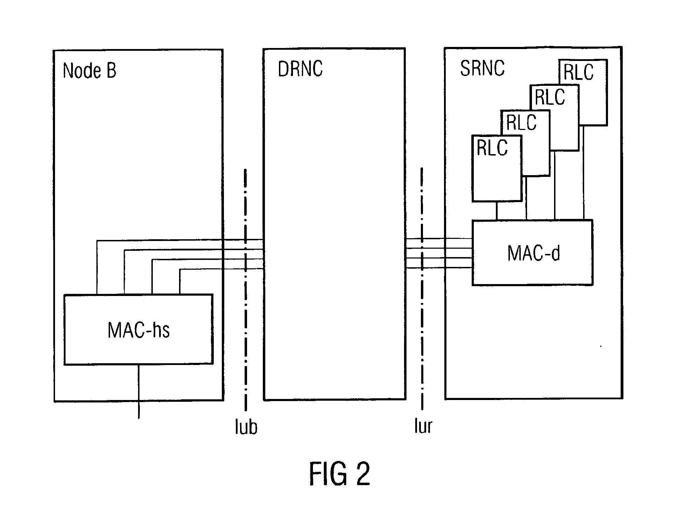

In the RLC-protocol on the radio network controller (hereinafter referred to as "RNC") data packets or radio link control service data units (hereinafter referred to as "RLC SDUs"), which have been received from the next higher layer above the RLC layer, are segmented into data packets of a pre-selected size. The data packets may then be provided with an RLC-header and will then build the content of the RLC PDUs (radio link control protocol data unit). The RLC PDUs are compiled in a first compilation and enter the MAC-d layer as MAC-d SDUs. After that, the MAC-d PDUs enter (with or without a MAC-header) are a lower protocol layer after a second processing step. In case of data transmission over the HS-DSCH in UMTS the lower protocol layer may be a MAC-hs layer on Node B as shown e.g. in Figs. 1 and 2.

MAC-hs layer or sub-layer processes the received MAC-d PDUs, each comprising one RLC-PDU, and builds from one or more of them a MAC-hs PDU, which also contains a MAC-hs header.. After that, the MAC-hs PDUs may be transmitted over the HS-DSCH, i.e. after additional processing in the physical layer via the air interface or radio interface.

The MAC-hs layer may decide, based on channel estimations, which transport block size or container size may be chosen for the next MAC-hs PDU, which is to be transmitted on the HS-DSCH over the radio interface or air interface. For a given RLC-PDU size, which translates into a corresponding MAC-d PDU size, since a MAC-d PDU only contains one RLC PDU, the MAC-hs PDU may contain a plurality of MAC-d PDUs (and therefore RLC-PDUs), depending on the container size. Segmentation size given by the so-called RLC size, which defines the size of the RLC PDU, without the number of bits for the header of the RLC PDU is taken into account. The size of the MRC-d PDU results from the sum of RLC size, RLC PDU header size and MAC header size. For other channels then the HS-DSCH, the size of the MAC-d PDU may be identical with the container size. But in case of a HS-DSCH this correspondence is not given, since the size of a MAC-hs PDU corresponds to the container size.

In case of a AM-data transmission, the size of a RLC PDU may only be changed by a time consuming reconfiguration of the RLC-machines on the transmitter side and the receiver side (100 to 200 ms). In case of UM-data transmission, the size of a RLC PDU may be changed without reconfiguration.

The RLC-protocol in UTRAN, which is the radio transmission network of LTMTS, is implemented in the RNC (radio network controller). The RNC may usually be connected to Node B over DRNC (drift RNC) as shown in Fig. 2. This means that two interfaces have to be passed, namely Iur between SRNC (serving RNC) and DRNC, and Iub between DRNC and Node B, which is schematically depicted in Fig. 2. Furthermore, the transmission of data from the RNC to Node B takes about half a roundtrip time. The roundtrip time is the time passing after transmission of data from the RNC to UE (User equipment such as a mobile station) and the reception of an answer in the RNC. The roundtrip time is usually about 100 ms in the worst case. This means that the transmission between SRNC and Node B takes up to 50 ms. Therefore, the RLC PDU size may not be changed fast even in the case of UM data transmission. A control message from Node B to SRNC, which may report to the RLC-machine on the SRNC that from now on, e.g. RLC PDUs of a size twice as big as the size of the RLC PDUs which have been transmitted before may be possible, may reach the RLC-machine after up to 50 ms. After that it may take additional 50 ms. for the RLC PDUs, which are packed into a MAC-d PDUs, and which have a bigger size that before to reach the MAC-hs. Since the transmission channel may change drastically much faster, the transport block size or container size should be changed and adjusted to the present channel conditions significantly faster. Otherwise, the number of retransmissions on the MAC-hs layer may increase dramatically, because the transport block size is too big.

Therefore, the size of an RLC PDU may be chosen small enough (both for AM and UM), that RLC PDU may be incorporated in the smallest transport block or container, which may be available for transmission at worst channel conditions. Only then may it be possible to transmit data in the smallest container at very bad channel conditions and therefore providing for most robust error protection possible.

According to the TS 25.321v5.2.0 standard indicated above, 70 transport blocks of the smallest size may be contained in a transport block of the biggest size. If the size of a RLC PDU is chosen such that a RLC PDU may be transmitted in a transport block or container of the smallest size, it may be, that with very good channel conditions up to about 70 RLC PDUs may be transmitted in a single MAC-hs PDU. At the same time, the error protection by error correcting encoding is rather low for big container sizes and, therefore, the risk for erroneous transmission is rather high. Retransmissions on the MAC-hs layer level have to be performed (at least in case of the so-called chase combining) with the same biggest transport block size. This again leads to a high risk of unsuccessful transmission, which means the scheduler in MAC-hs on Node B may have to abort the transmission. In case this happens for two consecutive transmissions, it may be possible to lose 140 RLC PDUs.

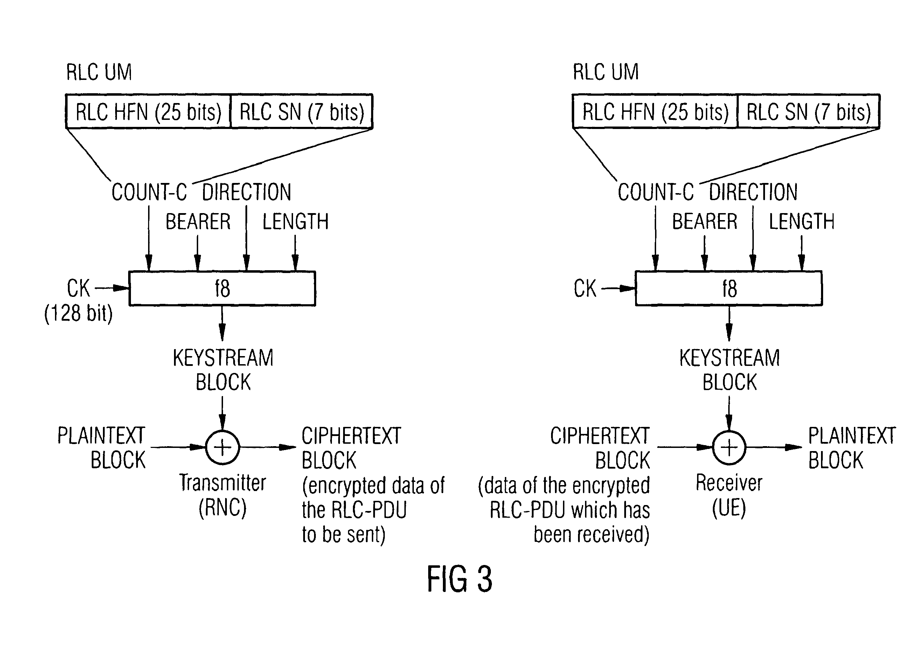

If these 140 lost RLC PDUs are consecutive RLC PDUs of the same logical channel, meaning that they are transmitted to the same RLC-machine or RLC entity, the RLC-machine or RLC entity on the receiving side may not be able, in case of UM, to notice that 140 RLC PDU got lost. It rather concludes per definition that 140 - 128 = 12 RLC PDUs got lost, since, in case of UM, there are only 128 different sequence numbers (according to TS25.322v5.2.0, Chapter 11.2.6 indicated above). There is no other conclusion possible for the UM RLC-machine or UM RLC entity. Thus, the RLC-machines on the transmitting and on the receiving side may get desynchronized with respect to the encryption/decryption mechanism: The RLC-machine on the receiving side does not notice that a wrap-around or roll-over in the RLC sequence number has occurred on the transmitting side, such that the HFN is incremented on the transmitting side but not on the receiving side so that from then on the receiving side uses a different COUNT-C (as time-varying input for in the decryption process) than the sending side uses for encryption. In more detail, this is because of the following reason: (For UMD transmission the HFN (hyper frame number) as shown in Fig. 3 represents the 25 most significant bits of the COUNT-C, which is the time-varying input parameter of the algorithm for encryption and decryption. The remaining least significant bits of COUNT-C are given by the 7-bit sequence number of the UM RLC PDU, which is sent (where COUNT-C is used as time-varying input of the encryption engine to cipher the payload bits of the UM RLC PDU) or was received (where COUNT-C is used as time-varying input of the decryption engine to decipher the payload bits of the UM RLC PDU). The HFN of the COUNT-C (on both the transmitting and receiving side) is incremented, if the RLC sequence number wraps around or rolls over, i.e. if the RLC sequence number of the previous UM RLC PDU that was processed by the considered UM RLC entity was 127 (corresponding - in binary representation - to all sequence number bits being equal to "1"), and the RLC sequence number of the currently processed UM RLC PDU is 0 (corresponding - in binary representation - to all sequence number bits being equal to "0").

This may lead to the result that the decoding of all RLC PDUs which follow the lost RLC PDUs, on the receiving side delivers meaningless data. The time dependent input parameter COUNT-C of the encoding/decoding algorithm comprises an incremented HFN-value and RLC-PDU-sequence number on the transmitting side, whereas on the receiving side the COUNT-C value comprises the none incremented HFN-value and the RLC-PDU-sequence number.

In contrast to this, for AM data transmission, due to the longer sequence number of AM RLC PDUs (12 bits, corresponding to a range from 0 to 4095), a loss of HFN incrementation synchronization may be very unlikely, since it would mean that about 4096/70, i.e. about 59 MAC-hs PDUs have to be lost, which contain at least 4096 AM RLC PDUs of the same logical channel.

Furthermore, it has to be noted that it may not be a necessary condition for the loss synchronization of the RLC-machines on the transmitting side and on the receiving side that consecutive MAC-hs PDUs totally get lost. It may be sufficient for losing synchronization to lose 128 consecutive RLC PDUs of the same logical channel or connection. Depending on the filling algorithm of the scheduler, which decides which MAC-hs PDUs are filled with which data, the consecutive 128 RLC PDUs may be, for example, distributed between two MAC-hs PDUs, which are not consecutive.

In order to avoid that a loss of more than one MAC-hs PDU may lead to the impossibility of further decrypting of data on the same logical channel on the receiving side, the scheduler in Node B is instructed to include only a maximum number of MAC-d PDUs of the same logical channel in UM or less than the maximum number in a MAC-hs PDU.

Fig. 3 shows a schematic representation of a method according to an exemplary embodiment of the present invention. UM RLC-PDUs 1, 2, 3, 4 are of the same first logical channel or first connection, whereas UM RLC-PDUs 5, 6, 7, 8 are of a second logical channel or second connection. In a first processing step, UM RLC-PDUs 1, 2, 3, 4, 5, 6, 7, 8 are handed over to the MAC-d layer 10, resulting in MAC-d SDUs 11,12,13,14,15,16,17,18.

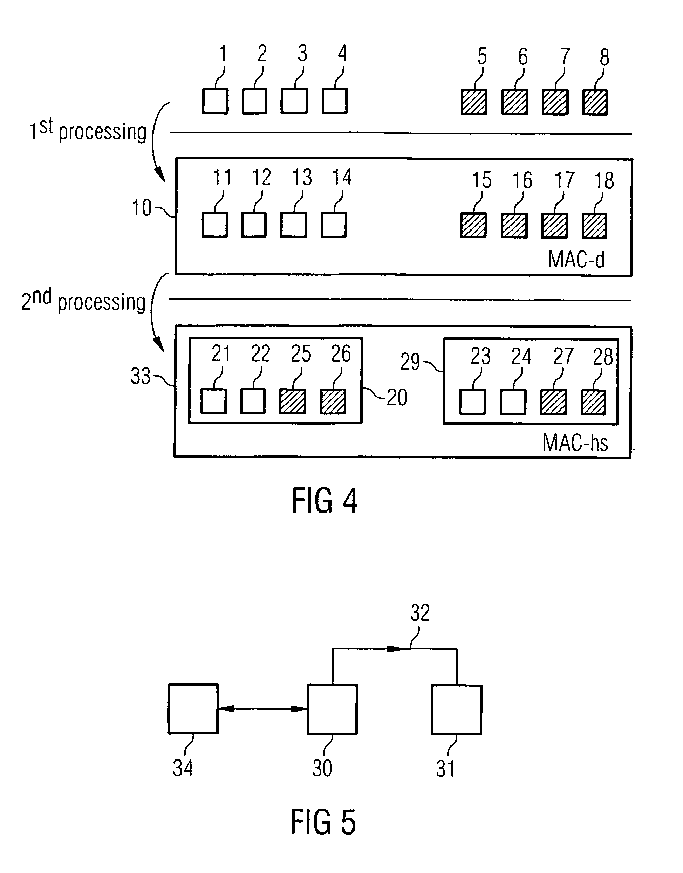

It should be noted that for clarity reasons, no difference is made in the reference numbering of PDUs and corresponding SDUs in Fig. 4.

MAC-d SDUs 11, 12, 13, 14 are of the same first logical channel or first connection and the MAC-d SDUs 15, 16, 17, 18 are of the same second logical channel or second connection. After that, in a second processing step, the MAC-d SDUs 11, 12, 13, 14, 15, 16, 17, 18 are processed in the MAC-d layer, where they get a MAC-header, which is the same for MAC-d SDUs 11,12, 13, 14, since they belong to the first logical channel, and another MAC-header for MAC-d SDUs 15, 16, 17, 18, which belong to the second logical channel. This processing results in the MAC-d PDUs 11, 12, 13, 14 for the first logical channel and MAC-d PDUs 15, 16, 17, 18 for the second logical channel, which are then handed over to a MAC-hs layer 33. This layer 33 is located in Node B in the current architecture of the UMTS system (see Fig. 2), but it could be located also on another network component. In the MAC-hs layer, the MAC-d PDUs 11, 12, 13, 14, 15, 16, 17, 18 become MAC-hs SDUs per definition. Their processing comprises building a container or MAC-hs PDU, which contains these MAC-hs PDUs and has a MAC-hs header. Selection of the MAC-d PDUs to be sent in a MAC-hs PDU is done in the MAC-hs layer, and the entity which does this could e.g. be the scheduler in the MAC-hs layer. Now according to a method of an exemplary embodiment of the present invention, only a maximum number (in the case depicted in Fig. 4 the maximum number is 2) of MAC-d PDUs of the same logical channel is accommodated in containers 20, 29. The container may contain, in addition, MAC-d PDUs of other logical channels, for which such a restriction to a maximum number does not hold, e.g. of logical channels, which carry AM RLC PDUs.

According to an aspect of the present invention, the number of MAC-hs PDUs or containers 20, 29 may be one of bigger and equal to a minimum number or in other words not smaller than a minimum number. This minimum number is assumed to be 2 in Fig. 4. After that the MAC-hs PDUs may be transmitted from the transmitting station 30 to a receiving station 31 via a communication link 32 (as may be seen in Fig. 5).

It should be noted that each data packet or RLC PDU contained in a MAC-d PDU, which is to be transmitted (as part of a MAC-hs PDU or container) from the transmitting station to the receiving station is provided with a consecutive data packet number and by virtue of the MAC header of the MAC-d PDU comprises connection information indicating whether the corresponding data packet belongs to (or in other words is carried by) a first logical channel or to a second logical channel.

In another exemplary embodiment of the present invention, the entity, which selects the MAC-d PDUs to be put in a MAC-hs PDU and which is located in the MAC-hs layer on Node B, runs a counter, by which it counts the number of MAC-d PDUs, of a UM logical channel, which it puts in a MAC-hs PDU. When receiving a MAC-d PDU from the MAC-d layer, this entity (e.g. the scheduler) reads the MAC-header of the MAC-d PDU. If, according to the MAC header, this MAC-d PDU belongs to the considered UM logical channel, this entity e.g. the scheduler only puts the MAC-d PDU in a MAC-hs PDU, which has to be sent in the future, if the counter for this UM logical channel does not exceed the value M1. If M1 would be exceeded, the entity e.g. the scheduler considers the MAC-d PDU for transmission in a MAC-hs PDU to be sent later. If there are relatively good channel conditions so that it can be expected that the loss probability of the MAC-hs PDU does not exceed e.g. the value 0.001, the mechanism can be modified by means of a minimum number M2 as follows: The entity identifies the 128 MAC-d PDUs of the considered UM logical channel to be sent next. For these MAC-d PDUs, the entity makes sure that they are sent in at least M2 different MAC-hs PDUs, where these MAC-hs PDUs can contain other MAC-d PDUs of other logical channels. The window, by which the entity determines the next 128 MAC-d PDUs to be sent, may be sliding: If M2=5 and the entity has e.g. sent on the UM logical channel LC1
- the first 60 MAC-d PDUs in the MAC-hs PDU with TSN 21
- further 40 MAC-d PDUs in the MAC-hs PDU with TSN 23
- further 20 MAC-D PDUs in the MAC-hs PDU with TSN 24
- further 7 MAC-d PDUs in the MAC-hs PDU with TSN 27, and
- one further MAC-d PDU in the MAC-hs PDU with TSN 29,
the entity can perform as follows:

If a positive acknowledgment message is received for the MAC-hs PDU with TSN 27, while the acknowledgment for the other MAC-hs PDUs is still pending, the entity assumes that the MAC-hs PDU with TSN 27 was decoded error-free at the receiving side. Hence, it can advance the window of the next 128 consecutive MAC-d PDUs of LC1 to be transmitted such that it contains the one MAC-d PDU, which is contained in the MAC-hs PDU with TSN 29 as well as the next 127 consecutive MAC-d PDUs, so that it can already compile additional MAC-hs PDUs to be transmitted later on. This is, however only applicable, if due to good channel conditions there is a very low risk of the transmitting side detecting a positive acknowledgement for a sent MAC-hs PDU although the receiving side sent a negative acknowledgment. The above strategy can be modified for worse channel conditions such that the window is advanced only if positive acknowledgements are received for more than only one MAC-hs PDU that is under transmission, since the risk that two or more positive acknowledgements are detected erroneously by the transmitting side is much lower than the risk that a single positive acknowledgement is detected erroneously, i.e. that the receiving side actually sent a negative acknowledgement.

In order to achieve the above functions, according to the present invention, e.g. in the UMTS, the entity in the MAC-hs layer on Node B, which entity decides about which MAC-d PDUs to send within a MAC-hs PDU (this entity may be the scheduler), has to know the connection information of each MAC-d PDU, which it processes, and whether the connection carries UM or AM RLC PDUs, so that this entity can relate the MAC-d PDUs to the different connections and thus determine whether the maximum allowed number of MAC-d PDUs of the same logical channel is reached for a MAC-hs PDU. In case of UMTS, the connection information (i.e. the logical channel identity) is contained in the MAC header of the MAC-hs PDU. Hence, the entity for selecting MAC-d PDUs to be sent in the same MAC-hs PDU has to know, which logical channels carry UM RLC PDUs. This can be achieved, e.g. by providing this entity with a list of all the logical channels which carry UM RLC PDUs. The same can be achieved by providing a list of all logical channels, which carry AM RLC PDUs, since it is only possible to configure transmission via the HS-DSCH for logical channels which transmit AM RLC PDUs or UM RLC PDUs. Furthermore, this entity (e.g. the scheduler) has to know the maximum number of data packets of the same logical channel which are to be included in a corresponding container 20, 29. This maximum number may be different for each logical channel carrying UM RLC PDUs (also denoted by UM logical channels) or it may be the same for all UM logical channels . The maximum number or maximum numbers for each logical channel as well as the list of UM logical channels, may be made available to the entity deciding about which MAC-d PDUs to send within a MAC-hs PDU on the Node B as follows:

When setting up an UM logical channel, the data of which is to be carried via the HS-DSCH, the SRNC notifies, via an RNSAP-procedure, the DRNC one or more of these pieces of information, which the DRNC then forwards to the Node B by an NBAP procedure. RNSAP procedures and NBAP procedures, which are most suited for this, have the same name, and are called
- *Radio Link Setup* Procedure (the corresponding message sent from the SRNC to the DRNC or from the DRNC to the Node B is called "RADIO LINK SETUP")
- *Synchronized Radio Link Reconfiguration Preparation* Procedure (the corresponding message sent from the SRNC to the DRNC, in case of the RNSAP, or from the DRNC to the Node B, in case of the NBAP, is called "RADIO LINK RECONFIGURATION PREPARE").

KNSAP (Radio Network System Application Part) is described in 3GPP TS 25,423 V5.3.0 (2002-09), 3rd Generation Partnership Project; Technical Specification Group Radio Access Network; UTRAN Iur Interface RNSAP Signalling (Release 5).

NBAP (Node B Application Part) is described in 3GPP TS 25.433 V5,2.0 (2002-09), 3rd Generation Partnership Project; Technical Specification Group Radio Access Network; UTRAN Iub interface NBAP signalling (Release 5).

It should be noted, that each container may be labeled with a container sequence number and that each container may comprise a different container size wherein the container size of each container is influenced by the number data packets inside the respective container. Of course, error protection of a container is influenced by the comber data packets inside the container.

Furthermore, it should be noted that the network i.e. e.g. the scheduler in the MAC-hs layer determines the maximum number of data packets of the same logical channel which ought to be added to a respective container and the minimum number of containers in which data packets of the same logical channel have to be added, based on channel conditions.

It should be noted, that if the maximum number of data packets of the same physical channel which may be added to the same container is set to be infinitely high, the number of MAC-d PDUs of the same logical channel to be added into the container is not restricted. In this case, the method according to an exemplary embodiment of the present invention may also be applied for AM data transmission.

Fig, 5 shows a communication system according to an exemplary embodiment of the present invention. The communication system comprises a transmitting station 30 with a network unit, a receiving station 31 and a computer 34. The computer is used for executing a software program product for performing a transmission of data packets from the transmitting station 30 to the receiving station 31. A transmission of data packets from the transmitting station 30 to the receiving station 31 may be performed via a wireless communication link 32. The transmission system depicted in Fig. 4 is adapted for performing a transmission of a first number of data packets of the same logical channel or connection in a container from the transmitting station 30 to the receiving station 31, wherein the first number is one of smaller and equal to a maximum number. This maximum number may be determined by a network unit based on channel conditions.

## Claims

1. Method of transmitting a plurality of data packets according to the UMTS standard from a transmitting station (30) to a receiving station (31), the method comprising the steps of: transmitting a first number of first data packets (21,22) of a plurality of first data packets (11-14) in a first container (20) of a plurality of second containers from the transmitting station (3 0) to the receiving station (31) **characterized in that** the first data packets (21, 22) are data packets of a first connection; and wherein the first number is than or smaller equal to a predefined maximum number of data packets of a single connection allowed to be contained in a first container (20), wherein further data packets (23, 24) of the first connection are transmitted in a second or further container (29).

2. The method of claim 1, wherein a preset number of first data packets is transmitted from the transmitting station to the receiving station in a second number of second containers; wherein the second number is bigger than or equal to a minimum number.

3. The method of claim 1, wherein a plurality of second data packets is transmitted from the transmitting station to the receiving station; wherein each data packet of the plurality of first and second data packets is provided with connection information, which indicates whether the corresponding data packet is a first data packet or a second data packet.

4. The method of claim 3, wherein each data packet of the plurality of first and second data packets is an encoded data packet comprising connection information; and wherein the consecutive data packet number of a third data packet of the plurality of first and second data packets is applied to encode the third data packet, resulting in an encoded third data packet comprising connection information.

5. The method of claim 1, wherein the first container is labelled with a container sequence number; wherein the first container has a first container size;
wherein the first container size is influenced by a number of data packets inside the first container; and wherein an error protection of the first container is influenced by the number of data packets inside the first container.

6. The method of claim 1, wherein the transmitting station is configured by a network unit; wherein the network unit determines the maximum number based on channel conditions; wherein the network unit transmits a first signal to the transmitting station; and wherein the first signal comprises information about the maximum number.

7. The method of claim 3, wherein the transmitting station reads the connection information of a fourth data packet of the plurality of first and second data packets;
wherein the transmitting station decides whether the fourth data packet is a first data packet depending on the connection information; and wherein, if the fourth data packet is a first data packet and if the resulting first number is smaller than or equal to the maximum number, the transmitting station adds the first data packet to the first container.

8. The method of claim 2, wherein the network unit determines the maximum number and the minimum number based on channel conditions; wherein the network unit transmits a second signal to the transmitting station; wherein the second signal comprises information about the maximum number and the minimum number.

9. The method of claim 1, wherein the method is applied for data transmission over the High Speed Downlink Shared Channel in UMTS.

10. Transmitting station (3 0) operating according to the UMTS standard for transmitting a plurality of data packets (21-28) from the transmitting station (30) to a receiving station (31), wherein the transmitting station (30) is adapted for performing a transmission of a first number of first data packets (21, 22) of a plurality of first data packets (11-14) in a first container (20) of a plurality of second containers from the transmitting station (30) to the receiving station (31) **characterized in that**
the first data packets (21, 22) are data packets of a first connection; wherein the first number is smaller than or equal to a predefined maximum number of data packets of a single connection allowed to be contained in a first container (20), wherein further data packets (23, 24) of the first connection are transmitted in a second or further container (29).

11. Communication system operating according to the UMTS standard for transmitting a plurality of data packets from a transmitting station (30) to a receiving station (31), wherein a transmitting station (30) as claimed in claim 10 is used.

12. Software program product containing a program code to carry out the steps of the method of any of the claims 1-9, when the program code is running on a computer.

## Patentansprüche

1. Verfahren zum Übertragen einer Anzahl Datenpakete nach der UMTS-Norm von einer sendenden Station (30) zu einer empfangenden Station (31), wobei das Verfahren die nachfolgenden Verfahrensschritte umfasst:
- das Übertragen einer ersten Anzahl Datenpakete (21, 22) einer Anzahl erster Datenpakete (11-14) in einem ersten Behälter (20) einer Anzahl zweiter Behälter von der sendenden Station (30) zu der empfangenden Station (31), **dadurch gekennzeichnet, dass** die ersten Datenpakete (21, 22) Datenpakete einer ersten Verbindung sind; und wobei die erste Anzahl kleiner ist als eine vorbestimmte maximale Anzahl Datenpakete einer einzigen Verbindung, die in einem ersten Behälter (20) sein darf, oder dieser letzteren Anzahl entspricht,
wobei weitere Datenpakete (23, 24) der ersten Verbindung in einem zweiten oder weiteren Behälter (29) übertragen werden.

2. Verfahren nach Anspruch 1, wobei eine voreingestellte Anzahl erster Datenpakete von der sendenden Station zu der empfangenden Station in einer zweiten Anzahl zweiter Behälter übertragen wird; wobei die zweite Anzahl größer ist als eine minimale Anzahl oder dieser letztern Anzahl entspricht.

3. Verfahren nach Anspruch 1, wobei eine Anzahl zweiter Datenpakete von der übertragenden Station zu der empfangenden Station übertragen wird, wobei jedes Datenpaket der Anzahl erster und zweiter Datenpakete mit Verbindungsinformation versehen ist, die angibt, ob das entsprechende Datenpaket ein erstes Datenpaket oder ein zweites Datenpaket ist.

4. Verfahren nach Anspruch 3, wobei jedes Datenpaket der Anzahl erster und zweiter Datenpakete ein codiertes Datenpaket ist, das Verbindungsinformation enthält; und wobei die nachfolgende Datenpaketnummer eines dritten Datenpakets der Anzahl erster und zweiter Datenpakete angewandt wird zum Codieren des dritten Datenpakets, was zu einem codierten dritten Datenpaket mit Verbindungsinformation führt.

5. Verfahren nach Anspruch 1, wobei der erste Behälter mit einer Behältersequenznummer versehen ist, wobei der erste Behälter eine erste Behältergröße hat;
wobei die erste Behältergröße durch eine Anzahl Datenpakete innerhalb des ersten Behälters beeinflusst wird, und wobei ein Fehlerschutz des ersten Behälters durch die Anzahl Datenpakete innerhalb des ersten Behälters beeinflusst wird.

6. Verfahren nach Anspruch 1, wobei die sendende Station durch eine Netzwerkeinheit konfiguriert ist; wobei die Netzwerkeinheit auf Basis von Kanalumständen die maximale Anzahl bestimmt; wobei die Netzwerkeinheit ein erstes Signal zu der sendenden Station überträgt; und wobei das erste Signal Information über die maximale Anzahl enthält.

7. Verfahren nach Anspruch 3, wobei die sendende Station die Verbindungsinformation eines vierten Datenpakets der Anzahl erster und zweiter Datenpakete liest; wobei die sendende Station entscheidet, ob das vierte Datenpaket ein erstes Datenpaket ist, und zwar abhängig von der Verbindungsinformation; und wobei, wenn das vierte Datenpaket ein erstes Datenpaket ist und wenn die resultierende erste Anzahl kleiner ist als die maximale Anzahl, oder dieser Anzahl entspricht, die sendende Station das erste Datenpakt dem ersten Behälter zufügt.

8. Verfahren nach Anspruch 2, wobei die Netzwerkeinheit die maximale Anzahl und die minimale Anzahl bestimmt, und zwar auf Basis von Kanalumständen; wobei die Netzwerkeinheit ein zweites Signal zu der sendenden Station überträgt; wobei das zweite Signal Information über die maximale und die minimale Anzahl enthält.

9. Verfahren nach Anspruch 1, wobei das Verfahren zur Datenübertragung über den "High Speed Downlink Shared Channel" in UMTS angewandt wird.

10. Sendende Station (30), arbeitend entsprechend der UMTS-Norm zur Übertragung einer Anzahl Datenpakete (21-28) von der sendenden Station (30) zu einer empfangenden Station (31), wobei die sendende Station (30) dazu vorgesehen ist, eine Übertragung einer ersten Anzahl erster Datenpakete (21, 22) einer Anzahl erster Datenpakete (1 1-14) in einem ersten Behälter (20) einer Anzahl zweiter Behälter von der sendenden Station (30) zu der empfangenden Station (31) durchzuführen, **dadurch gekennzeichnet, dass** die ersten Datenpakete (21, 22) Datenpakete einer ersten Verbindung sind; wobei die erste Anzahl kleiner ist als eine vorbestimmte maximale Anzahl Datenpakete einer Einzelverbindung, die in einem ersten Behälter (20) enthalten sein darf, oder dieser Anzahl entspricht, wobei weitere Datenpakete (23, 24) der ersten Verbindung in einem zweiten oder weiteren Behälter (29) transportiert werden.

11. Kommunikationssystem nach der UMTS-Norm zum Übertragen einer Anzahl Datenpakete von einer sendenden Station (30) zu einer empfangenden Station (31), wobei eine sendende Station (30) nach Anspruch 10 verwendet wird.

12. Softwareprogrammprodukt mit einem Programmcode zum Durchführen der Schritte des Verfahrens nach einem der Ansprüche 1-9, wenn der Programmcode in einem Computer läuft.

## Revendications

1. Procédé de transmission d'une pluralité de paquets de données selon le standard UMTS à partir d'une station émettrice (30) jusqu'à une station réceptrice (31), le procédé comprenant les étapes de: transmission d'un premier nombre de premiers paquets de données (21, 22) d'une pluralité de premiers paquets de données (1 1-14) dans un premier conteneur (20) d'une pluralité de seconds conteneurs à partir de la station émettrice (30) jusqu'à la station réceptrice (31), **caractérisé en ce que** les premiers paquets de données (21, 22) sont des paquets de données d'une première connexion; et où le premier nombre est plus petit ou égal à un nombre maximum prédéfini de paquets de données d'une connexion unique autorisée à être contenue dans un premier conteneur (20), où des paquets de données supplémentaires (23, 24) de la première connexion sont transmis dans un second conteneur ou conteneur supplémentaire (29).

2. Procédé selon la revendication 1, dans lequel un nombre prédéfini de premiers paquets de données sont transmis à partir de la station émettrice jusqu'à la station réceptrice dans un second nombre de seconds conteneurs; où le second nombre est plus grand ou égal à un nombre minimum.

3. Procédé selon la revendication 1, dans lequel une pluralité de deuxièmes paquets de données sont transmis à partir de la station émettrice jusqu'à la station réceptrice; où chaque paquet de données de la pluralité de premiers et de deuxièmes paquets de données est procuré avec des informations de connexion, qui indiquent si le paquet de données correspondant est un premier paquet de données ou un deuxième paquet de données.

4. Procédé selon la revendication 3, dans lequel chaque paquet de données de la pluralité de premiers et de deuxièmes paquets de données est un paquet de données codé comprenant des informations de connexion; et dans lequel le nombre de paquets de données consécutifs d'un troisième paquet de données de la pluralité de premiers et de deuxièmes paquets de données est utilisé pour coder le troisième paquet de données, ce qui aboutit à un troisième paquet de données codé comprenant des informations de connexion.

5. Procédé selon la revendication 1, dans lequel le premier conteneur est référencé au moyen d'un numéro de séquence de conteneur; où le premier conteneur a une première taille de conteneur;
où la première taille de conteneur est influencée par un nombre de paquets de données inclus dans le premier conteneur; et où une protection contre les erreurs du premier conteneur est influencée par le nombre de paquets de données inclus dans le premier conteneur.

6. Procédé selon la revendication 1, dans lequel la station émettrice est configurée par une unité de réseau; où l'unité de réseau détermine le nombre maximum sur la base des conditions du canal; où l'unité de réseau transmet un premier signal à la station émettrice; et où le premier signal comprend des informations au sujet du nombre maximum.

7. Procédé selon la revendication 3, dans lequel la station émettrice lit les informations de connexion d'un quatrième paquet de données de la pluralité de premiers et de deuxièmes paquets de données; où la station émettrice décide si le quatrième paquet de données est un premier paquet de données en fonction des informations de connexion; et où, si le quatrième paquet de données est un premier paquet de données et si le premier nombre résultant est plus petit ou égal au nombre maximum, la station émettrice ajoute le premier paquet de données au premier conteneur.

8. Procédé selon la revendication 2, dans lequel l'unité de réseau détermine le nombre maximum et le nombre minimum sur la base des conditions du canal; où l'unité de réseau transmet un second signal à la station émettrice; où le second signal comprend des informations au sujet du nombre maximum et du nombre minimum.

9. Procédé selon la revendication 1, dans lequel le procédé est appliqué à une transmission de données par le "High Speed Downlink Shared Channel" de l'UMTS.

10. Station émettrice (30) opérant selon le standard UMTS pour transmettre une pluralité de paquets de données (21-28) à partir de la station émettrice (30) jusqu'à une station réceptrice (31), où la station émettrice (30) est adaptée pour effectuer une transmission d'un premier nombre de premiers paquets de données (21, 22) d'une pluralité de premiers paquets de données (11-14) dans un premier conteneur (20) d'une pluralité de seconds conteneurs à partir de la station émettrice (30) jusqu'à la station réceptrice (31), **caractérisée en ce que**
les premiers paquets de données (21, 22) sont des paquets de données d'une première connexion; où le premier nombre est plus petit ou égal à un nombre maximum prédéfini de paquets de données d'une connexion unique autorisée à être contenue dans un premier conteneur (20), où des paquets de données supplémentaires (23, 24) de la première connexion sont transmis dans un second conteneur ou conteneur supplémentaire (29).

11. Système de communications opérant selon le standard UMTS pour transmettre une pluralité de paquets de données à partir d'une station émettrice (30) jusqu'à une station réceptrice (31), où une station émettrice (30) selon la revendication 10 est utilisée.

12. Produit logiciel contenant un code de programme pour mettre en oeuvre les étapes du procédé selon l'une quelconque des revendications 1-9, lorsque le code de programme est exécuté sur un ordinateur.
